# EUROPEAN PATENT SPECIFICATION

(11) **EP 3 696 034 B1**
(45) Date of publication and mention of the grant of the patent: **03.11.2021**
(21) Application number: 20156670.0
(22) Date of filing: 11.02.2020
(51) Int. Cl.: B60T 8/32

(54) **RAILCAR BRAKING DEVICE**
BREMSSYSTEM FÜR BAHNFAHRZEUG
SYSTÈME DE FREIN POUR VÉHICULE FERROVIAIRE

(30) Priority: 12.02.2019 JP 2019023065
(43) Date of publication of application: 19.08.2020
(73) Proprietor: Nabtesco Corporation, Tokyo 102-0093 (JP)
(72) Inventor: ASANO, Yoshio, Tokyo, 102-0093 (JP); KASAMATSU, Masaki, Tokyo, 102-0093 (JP)
(74) Representative: Grünecker Patent- und Rechtsanwälte PartG mbB

(56) References cited:
- WO-A2-2009/071913
- CN-B- 107 298 111
- FR-A1- 2 204 521
- JP-A- H06 133 404
- US-A1- 2014 163 785

## Description

The present invention relates to a railcar braking device.

The wheel of a railcar is worn and could be damaged as the brake is applied in the railcar and the wheel skids. A flat damage caused as the wheel skids and the tread is shaved is called a flat. In the related art, a flat prevention apparatus (antilock brake system: ABS) is mounted in a railcar in order to avoid occurrence of a flat. The flat prevention apparatus is designed to ensure readhesion of the skidding wheel, by detecting skidding of a wheel based on the rotational speed of the wheel or the axle shaft occurring when the brake is applied, and using an antiskid valve to repeat the steps of decreasing, maintaining, and increasing the brake pressure.

WO 2009/071913 A1 describes a typical wheel slide control system, which comprises a plurality of sensors to measure the rotational speed of each axle of the vehicle. During operation, the outputs of the sensors are then fed to a central brake control unit, which compares the measured speed values with those of adjacent axles. If the difference exceeds a predetermined value, brake pressure is released and re-applied until the wheel speed falls within acceptable limits.

JP H06 133404 A concerns a wheel slide control for vehicles, where a determination unit determines that an axle is in a sliding state when a speed difference exceeds a predetermined value. The speed of the fastest axle serves as a reference value. A judging unit controls a sliding prevention valve based on the determination result. Depending on whether or not there is a sliding state, the brake pressure is increased or decreased or maintained to re-adhere the sliding wheels.

FR 2 204 521 A presents a wheel slide controller for braked four-axle vehicles, particularly railway vehicles. It is explicitly mentioned here that the rotational speeds of the individual axles are measured and compared with each other. If the speed difference exceeds a predetermined amount, the brake is released on the respective axle running at the lower speed until the speed of said axle has matched the speed of the axle running at the higher speed by the predetermined amount.

Unlike an electric train, a freight car is not provided with a power source, and so it has therefore been difficult to mount a flat prevention apparatus in a freight car. In this background, JP 2011 126377 A, for example, proposes an antilock brake system including: a braking force generation mechanism that generates a braking force for the wheel of an accompanying car based on a brake command; a speed sensor provided in the wheel or the axle shaft; an antiskid control operation unit that determines skidding of the wheel based on a signal from the speed sensor and outputs an antiskid signal; an antiskid valve that weakens the braking force based on the antiskid signal; a power generator that generates an electric power based on the rotational movement of the axle shaft or the wheel; and a power storage that stores the electric power generated by the electric generator and is capable of supplying the electric power to the antiskid control operation unit and the antiskid valve.

Mounting a flat prevention apparatus in a freight car poses a problem in that is necessary to secure not only a power source but also a source of air. Stated otherwise, many of train engines of old type are not provided with a main air tank pipe. In this case, only the brake pipe of the train engine is connected to the freight car. The only source of air pressure supplied to the brake cylinder of the freight car would be the compressed air in the supply air tank stored via the brake pipe. Therefore, the source of air to implement the flat prevention control (post-skid readhesion control) described above is insufficient, and it has been difficult to realize flat prevention control equivalent to that of an electric railcar in a freight car. Accordingly, realization of flat prevention control suited for application to freight cars has been called for.

The present invention addresses the above-described issue, and a general purpose thereof is to provide a railcar braking device for realizing flat prevention control suited for application to freight cars.

This purpose is achieved according to the present invention by the provision of a railcar braking device having the features of independent claim 1. Further developments of the present invention are specified in the dependent claims.

An embodiment relates to a railcar braking device. The railcar braking device includes: an air brake that applies a braking force to a wheel joined to an axle shaft with a pressure of air and includes a discharge valve for reducing the pressure of air; and a controller that, when there is a predetermined difference or larger in rotational speed between a plurality of axle shafts, controls the air brake to only discharge air from the air brake by controlling the discharge valve and to release, for a predetermined period of time, the braking force applied to the wheel joined to the axle shaft rotating at a relatively low speed.

Another embodiment also relates to a railcar braking device. The railcar braking device includes: a brake that applies a braking force to a wheel joined to an axle shaft; and a controller that, when there is a predetermined difference or larger in rotational speed between a plurality of axle shafts, controls the brake to release the braking force applied to the wheel joined to the axle shaft rotating at a relatively low speed and to maintain a state in which the braking force is released for a predetermined period of time even if the rotational speed of the axle varies.

Optional combinations of the aforementioned constituting elements, and replacement of constituting elements or implementations of the present invention in the form of methods, devices, programs, and transitory or non-transitory recording mediums storing programs may also be practiced as optional modes of the present invention.

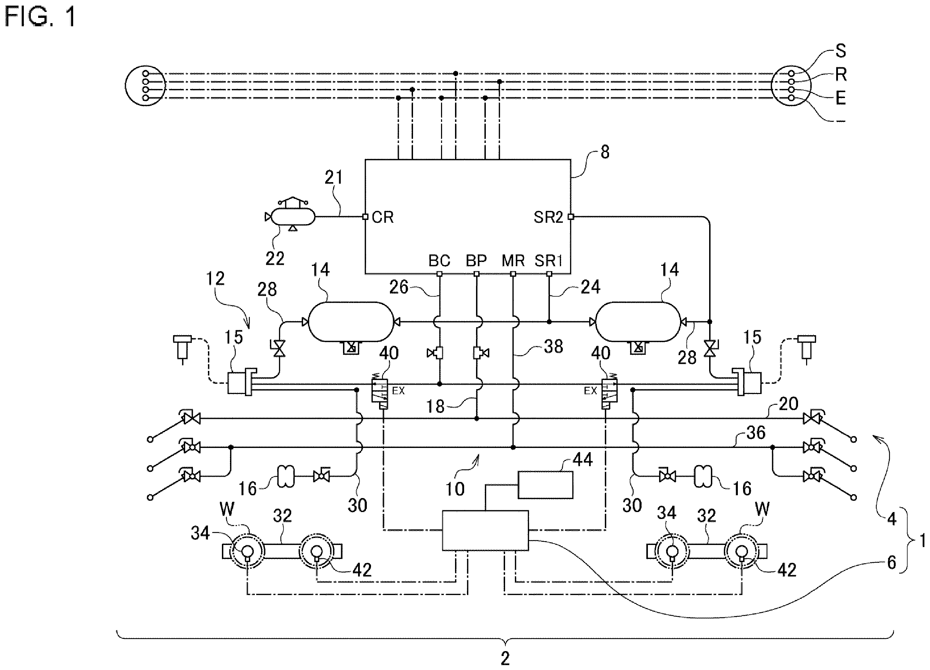

Fig. 1 is a block diagram showing a railcar braking device according to an embodiment.

A description will be given of the present invention based on suitable embodiments with reference to the drawings. The embodiments do not intend to limit the scope of the invention but exemplify the invention. Not all of the features and the combinations thereof described in the embodiments are necessarily essential to the invention. Like numerals are used to represent like elements, members, and processes and a description will be omitted as appropriate. The scales and shapes shown in the figures are defined for convenience's sake to make the explanation easy and shall not be interpreted limitatively unless otherwise specified.

Terms like "first", "second", etc. used in the specification and claims do not indicate an order or importance by any means unless specified otherwise and are used to distinguish a certain feature from the others. Those of the members that are not material to the description of the embodiments are omitted in the drawings.

Fig. 1 is a block diagram showing a railcar braking device according to an embodiment. The railcar braking device 1 according to the embodiment is mounted in a railcar in which a freight car 2 is joined to a train engine (not shown). A braking line S, a reduced braking line R, and an emergency line E are connected to the railcar braking device 1 as electric signal lines. An earth line "-" is also connected to the railcar braking device 1. In response to manipulation of the brake valve, etc. of the train engine, a brake signal comprising an electric command for brake actuation is transmitted to the railcar braking device 1 via the braking line S. Further, a reduced braking signal comprising an electric command for releasing the brake is transmitted to the railcar braking device 1 via the reduced braking line R in response to manipulation of the brake valve, etc. Further, an emergency braking signal comprising an electric command for actuation of emergency braking is transmitted to the railcar braking device 1 via the emergency line E in response to manipulation of the brake valve, etc. Hereinafter, the brake signal, the reduced braking signal, and the emergency braking signal are collectively referred to as command signals.

The railcar braking device 1 includes an air brake 4 for generating a braking force applied to wheels W with the pressure of air and a controller 6 for controlling the air brake 4 as main components. The air brake 4 includes a brake control device 8, a supply and discharge system 10, a brake system 12, a supply air tank 14, a variable load valve 15, a brake mechanism 16, etc.

The brake control device 8 operates by receiving a command signal from the braking line S, the reduced braking line R, and the emergency line E to control the brake mechanism 16 to generate a braking force determined by the received command signal or to release the braking force. The supply air tank 14 accumulates air supplied to the brake mechanism 16. The variable load valve 15 is positioned in accordance with the load on the freight car 2 (car) to control the supply of air from the supply air tank 14 to the brake mechanism 16. The brake mechanism 16 supplied with air applies a braking force to the wheels W. The brake mechanism 16 is comprised of, for example, a brake cylinder or a brake diaphragm. The brake control device 8 and the supply air tank 14 are connected to the brake pipe 20 by the supply and discharge system 10. Further, the brake control device 8 and the supply air tank 14 are connected to the variable load valve 15 and the brake mechanism 16 by the brake system 12.

The brake control device 8 is comprised of, for example, a publicly known three-way pressure control valve. Fig. 1 depicts the brake control device 8 as a functional block. The three-way pressure control valve is a control valve configured to control the pressure of the brake mechanism 16 according to a balance between the pressure in the brake pipe 20, the pressure in a control air tank 22, and the pressure of the brake mechanism 16. The structure of the three-way pressure control valve is publicly known so that illustration of the internal structure is omitted. The structure is explained below only briefly.

The brake control device 8 is structured such that the first chamber, the second chamber, the third chamber, and the fourth chamber are arranged in the stated order. Between the first chamber and the second chamber is provided a large diaphragm displaceable in accordance with the variation in pressure difference between the chambers. Between the third chamber and the fourth chamber is provided a small diaphragm displaceable in accordance with the variation in pressure difference between the chambers. The brake pipe 20 is connected to the brake control device 8 via a pipe 18 of the supply and discharge system 10. A portion of the compressed air in the brake pipe 20 is introduced into the first chamber via a first introduction pipe having a check valve. Another portion of the compressed air in the brake pipe 20 is introduced into the second chamber via a second introduction pipe.

Further, the control air tank 22 is connected to the first chamber via a pipe 21, and the compressed air in the brake pipe 20 is accumulated in the control air tank 22. Further, the supply air tank 14 is connected to the brake control device 8 via a pipe 24 of the supply and discharge system 10. The compressed air in the brake pipe 20 is also accumulated in the supply air tank 14 via the brake control device 8. Further, the brake control device 8 is provided with a valve for discharging the compressed air in the brake pipe 20 in response to the braking command or the emergency braking command.

A valve shaft is connected to the large diaphragm defining the first chamber and the second chamber. The valve shaft extends across the second chamber, the third chamber, and the fourth chamber. A small diaphragm that defines the third chamber and the fourth chamber is mounted in the middle of the valve shaft. The interior of the third chamber is maintained at an atmospheric pressure. A control valve is provided in the fourth chamber, and the brake pipe 20 is connected to the fourth chamber via the control valve. The control valve is capable of establishing or blocking communication between the fourth chamber and the brake pipe 20.

The valve shaft is capable of pushing the control valve by being displaced in association with the displacement of the large diaphragm. When the valve shaft pushes the control valve, the fourth chamber and the brake pipe 20 communicate with each other. Further, the valve shaft has a hollow structure. The hollow part of the valve shaft opens to air at one end thereof and opens toward the control valve at the other end. When the valve shaft hits the control valve, the opening of the hollow part is blocked by the control valve. While the valve shaft is not in contact with the control valve, the fourth chamber communicates with air via the hollow part of the valve shaft.

The fourth chamber is connected to the variable load valve 15 via a pipe 26 of the brake system 12. The pipe 26 supplies a command pressure delivered from the brake control device 8 in accordance with a command signal to the variable load valve 15. The command pressure is a pilot pressure that directs the variable load valve 15 to supply air from the supply air tank 14 to the brake mechanism 16. The supply air tank 14 is connected to the variable load valve 15 via a pipe 28 of the brake system 12. The variable load valve 15 is connected to the brake mechanism 16 via a pipe 30 of the brake system 12.

Two carriages 32 are provided in the freight car 2 of this embodiment. Two axle shafts 34 are provided in each carriage 32, and two wheels W are fixed to each axle shaft 34. The supply air tank 14, the variable load valve 15, and the brake mechanism 16 are provided in each of the two carriages 32. The braking force generated by the brake mechanism 16 is evenly applied to the four wheels W of each carriage 32. When the command pressure is received from the brake control device 8 via the pipe 26, each variable load valve 15 supplies compressed air of an amount determined by the load of the freight car 2 to each brake mechanism 16 from each supply air tank 14. Each brake mechanism 16 pushes a brake pad (not shown) to the wheel W with the supplied compressed air, thereby applying the braking force to the wheel W.

When a braking signal is received from the brake line S, the brake control device 8 opens a discharge valve to reduce the air pressure in the brake pipe 20. When the pressure in the brake pipe 20 is reduced, the internal pressure of the second chamber communicating with the brake pipe 20 is reduced. Meanwhile, the check valve is interposed between the first chamber and the brake pipe 20, and the control air tank 22 is connected to the first chamber. Therefore, the internal pressure of the first chamber is maintained. This causes the internal pressure of the first chamber to be higher than the internal pressure of the second chamber, displacing the large diaphragm toward the second chamber and causing the control valve to be pushed by the valve shaft.

When the control valve is opened, the compressed air in the brake pipe 20 is supplied to the fourth chamber, increasing the internal pressure of the fourth chamber. This supplies the command pressure from the fourth chamber to the variable load valve 15 via the pipe 26. The variable load valve 15 receiving the command pressure supplies the compressed air accumulated in the supply air tank 14 to the brake mechanism 16 via the pipes 28, 30. As a result, the braking force is applied to the wheel W. Further, as the internal pressure of the fourth chamber becomes higher than the internal pressure of the third chamber, the small diaphragm is displaced toward the third chamber, causing the valve shaft to be displaced gradually. This closes the control valve and maintains the air pressure supplied to the brake mechanism 16. In other words, the braking force applied to the wheel W is maintained.

When a reduced braking signal is received from the reduced braking line R, the brake control device 8 increases the air pressure in the brake pipe 20. This increases the internal pressure of the second chamber, causing the large diaphragm and the valve shaft to be displaced toward the first chamber. This removes the valve shaft away from the control valve and opens the fourth chamber to air via the hollow part of the valve shaft. As a result, the command pressure is reduced, the compressed air supplied to the brake mechanism 16 is discharged, and the braking force is released.

When the emergency braking signal is received from the emergency line E, the brake control device 8 supplies the compressed air from the supply air tank 14 to the brake mechanism 16 in a period of time shorter than in the case of receiving the braking signal. When the emergency braking signal is received, the brake control device 8 supplies air to the brake mechanism 16 so that a braking force of the maximum value of regular braking is applied to the wheel W. The emergency braking signal is originated when, for example, the automatic train stop (ATS) device is actuated.

Fig. 1 shows a main air tank pipe 36 and a pipe 38 connecting the main air tank pipe 36 and the brake control device 8. In this embodiment, the main air tank pipe 36 is not connected to the train engine. Therefore, accumulation of air from the main air tank pipe 36 to the supply air tank 14 is not performed.

Further, the air brake 4 includes a discharge valve 40 for reducing the pressure of air supplied to the brake mechanism 16. The discharge valve 40 of this embodiment is comprised of a single electromagnetic valve. The discharge valve 40 is a normally-open 3-port electromagnetic valve that opens when energized. The discharge valve 40 is provided in the pipe 26 and is controlled by the controller 6 to open or close. The discharge valve 40 is provided in the pipe 26 so as to be capable of discharging air in the pipe 26. When the discharge valve 40 is open, the air pressure in the pipe 26 is discharged via the discharge valve 40. This removes the command pressure supplied to the variable load valve 15 so that the variable load valve 15 stops supplying the compressed air from the supply air tank 14 to the brake mechanism 16. As a result, the pressure of air supplied to the brake mechanism 16 is reduced and the braking force applied to the wheel W is released.

The controller 6 is an electronic control operation unit. Fig. 1 depicts the controller 6 as a functional block. The functional blocks depicted are implemented in hardware such as electronic devices or mechanical components such as a CPU of a computer, and in software such as a computer program. Fig. 1 depicts functional blocks implemented by the cooperation of these elements. Therefore, it will be understood by those skilled in the art that the functional blocks may be implemented in a variety of manners by a combination of hardware and software.

A speed sensor 42 for detecting the rotational speed of the axle shaft 34 is provided in each axle shaft 34 of each carriage 32. Each speed sensor 42 transmits a signal indicating the rotational speed of the axle shaft 34 to the controller 6. The controller 6 can access the rotational speed of each axle shaft 34 and a difference in rotational speed between the plurality of axle shafts 34, by referring to the result of detection by each speed sensor 42.

Further, the railcar braking device 1 includes a battery 44 external to the freight car 2. The battery 44 stores electric power supplied to the discharge valve 40 and the controller 6. For example, the battery 44 is not charged inside the freight car 2 and is removed from the freight car 2 periodically and replaced by a charged battery 44.

A description will now be given of flat prevention control performed by the controller 6. In a freight train in which a plurality of freight cars are joined to a train engine, the train engine weighing nearly 100 tons runs to lead the freight cars. Therefore, the freight cars behind run on the surface of a railway track cleaned by the train engine. It has therefore been considered in the related art that freight cars are unlikely to skid. Further, 100-series container freight cars are designed to be able to generate a braking force nearly up to the point of limit where skidding is caused so as to enable high-speed operation. Normally, however, drivers have applied a braking force less than half the maximum braking force to prevent shifted freight load. This has also been a reason why freight cars are unlikely to skid.

However, investigations of wheels of freight cars have found that more flats than would be expected occur. In some years, flats occurred in about 1/4 of the entire freight cars per year, for example. Characteristically, it was found that flats in freight cars occur only in one of the wheels (hereinafter, this phenomenon will be referred to as one-wheel flat). Flats may occur in both wheels fixed to a common axle shaft but, due to this characteristic, flats in the respective wheels occur at positions shifted from each other in the direction of rotation of the wheels. Wheels fixed to a common axle shaft skid simultaneously. Normally, therefore, flats should occur at equivalent positions in the wheels.

We have studied one-wheel flats that occur in freight cars extensively and have found a one-wheel flat occurs when the emergency brake is actuated when a freight car passes through an entrance or an exit of a canted track. A cant is defined as raising the outer rail higher above the inner rail at, for example, a curve of a track. Therefore, a slight difference in height results at the boundary between a canted track and each of straight tracks before and after the canted track.

When a freight car passes through an entrance or an exit of a canted track, one of the two axle shafts provided in the carriage may be positioned inside the canted track, and the other is positioned outside the canted track. In this state, one wheel of the two wheels fixed to one of the axle shafts undergoes a decrease of wheel load, and the load of the freight car is supported by a total of three wheels including the remaining one wheel and the two wheels fixed to the other axle shaft. When the emergency brake is actuated in this state, the braking force on the axle shaft to which the wheel undergoing a decrease in wheel load fixed will become excessive so that the other wheel fixed to this axle shaft, i.e., the wheel not undergoing a decrease in wheel load skids. As a result, a one-wheel flat occurs.

One conceivable measure to counter a one-wheel flat is to mount a related-art flat prevention device employed in electric trains in a freight car. As stated above, however, many of train engines of old type are not provided with a main air tank pipe routed inside. In this case, even if a main air tank pipe is routed in a freight car, compressed air is not supplied from the train engine via the main air tank pipe. Therefore, the only source of air would be the compressed air stored in the supply air tank via the brake pipe so that it is difficult to perform flat prevention control equivalent to that of electric trains.

For example, repeating the steps of discharging and supplying air from and to the brake cylinder twice for flat prevention control in the event of emergency braking results in the internal pressure of the supply air tank being lower than the internal pressure of the brake cylinder. When the internal pressure of the supply air tank is reduced, the air pressure is supplemented from the brake pipe, but then this reduces the internal pressure in the brake pipe. When the internal pressure in the brake pipe is reduced, the brake control device operates to raise the brake pressure with the result that flat prevention control may be disrupted.

In this background, we have conceived of exercising the following control for flat prevention control suited for application to freight cars. As described above, the wheel may skid as the freight car passes through the boundary between a canted track and a straight track. In the case a wheel of a freight car is detected to skid, therefore, the brake pressure may be reduced only while the freight car passes through the boundary. Thus, when the controller 6 detects a predetermined difference or larger in rotational speed between the plurality of axle shafts 34 based on the result of sensing by the speed sensor 42, the controller 6 reduces the command pressure in the pipe 26 by controlling (exciting) the discharge valve 40 associated with the axle shaft 34 rotating at a relatively low speed. This only causes the compressed air supplied to the brake mechanism 16 to be discharged and releases, for a predetermined period of time, the braking force applied to the wheel W joined to the axle shaft 34 rotating at relatively low speed. This ensures readhesion of the skidding wheel W.

In other words, the controller 6 totally discharges the brake mechanism 16 only once in a single session of flat prevention control when the controller 6 senses skidding of the wheel W, maintaining a state in which the brake mechanism 16 is not applying a braking force to the wheel W for a predetermined period of time. In this respect, the inventive flat prevention control is different from the related-art flat prevention control in which the steps of decreasing, maintaining, and increasing the brake pressure are repeated in accordance with the variation the rotational speed of the axle shaft. Stated otherwise, the controller 6 performs feed forward control in which the braking force applied to the wheel W joined to the axle shaft 34 rotating at a lower speed is released for a predetermined period of time irrespective of the variation in rotational speed of the axle shaft 34, when there is a predetermined difference or larger in rotational speed between the plurality of axle shafts 34.

For example, the controller 6 compares the rotational speed of the four axle shafts 34 provided in the freight car 2 and detects the axle shaft 34 rotating at a relatively low speed. In a situation in which the freight car 2 passes through an entrance or an exit of a canted track, one of the carriages 32 provided in the freight car 2 is positioned between the canted track and the straight track, but the other carriage 32 is position on the straight track. Therefore, the controller 6 may determine whether the rotational speed of the axle shaft 34 in the one of the carriages 32 is reduced with reference to the average rotational speed of the axle shafts 34 in the other carriage 32. Alternatively, the controller 6 may determine whether the rotational speed is reduced by making a comparison between the axle shafts 34 of different freight cars 2.

Further, the controller 6 demagnetizes and closes the discharge valve 40 after an elapse of a predetermined period of time and restores the command pressure supplied from the pipe 26 to the variable load valve 15. In other words, the controller 6 terminates flat prevention control and returns to original braking control. As a result, the compressed air is supplied from the supply air tank 14 to the brake mechanism 16, generating the braking force applied to the wheel W again. For example, the braking force of a magnitude identical to that of the braking force applied before performing flat prevention control is applied to the wheel W for which the braking force has been released.

In the flat prevention control of this embodiment, the number of times that air is discharged from the brake mechanism 16 is limited, and the state in which the braking force is released is maintained for a predetermined period of time. Therefore, the steps of supplying and discharging air to the brake mechanism is not repeated unlike the case of related flat prevention control. Therefore, the amount of air consumed in flat prevention control is reduced. Accordingly, the inventive control is suited for application in the freight car 2 in which a source of air is scarce. The "predetermined difference or larger in rotational speed" and the "predetermined period of time" can be appropriately defined based on an experiment or simulation by the designer. For example, the predetermined period of time is 2-3 seconds.

In the related-art flat prevention control, the brake pressure is reduced in stages, and the reduced brake pressure is maintained. Therefore, the antiskid valve provided in the related-art flat prevention device is provided with a lockout magnet valve and a release magnet valve. Therefore, there has been a problem in that the structure of the flat prevention device is complicated and costly. In the flat prevention control practiced in this embodiment, on the other hand, the brake pressure is only released. For this reason, flat prevention control can be realized only by using the discharge valve 40. Further, the discharge valve 40 is comprised of a single, normally-open, two-position, three-port electromagnetic valve having a simple structure. Accordingly, the structure of the railcar braking device 1 can be simplified, and the cost for installation of the railcar braking device 1 can be reduced.

Further, many of train engines of old type are not provided with an electric line routed inside. In this case, electric power cannot be supplied from the train engine via an electric line even if an electric line is routed inside the freight car. It is therefore necessary to secure a power source in the freight car. To address this, the railcar braking device 1 of this embodiment is provided with the external battery 44. This makes it possible to avoid providing a velocity generator or a charge-discharge controller in the freight car 2 for the purpose of securing a power source and avoid providing a complicated circuit necessary for installation of these devices. Accordingly, the installation cost of the railcar braking device 1 can be reduced. Further, possible sources of failure such as a velocity generator and a charge-discharge controller can be reduced.

In this embodiment, the braking force is released for all four wheels W provided in the carriage 32. Alternatively, the braking force may be released only for the wheel W joined to the axle shaft 34 rotating at a lower speed. In this case, the structure of the brake mechanism 16 may become complicated. However, reduction in the braking force in the freight car 2 as a whole can be inhibited, and the braking distance is inhibited from being extended.

As described above, the railcar braking device 1 according to this embodiment is a braking device mounted in a railcar in which the freight car 2 is joined to the train engine and includes the air brake 4 that applies a braking force to the wheel W with a pressure of air and a controller 6 that controls the air brake 4. The air brake 4 includes a discharge valve 40 for reducing the pressure of air for generating the braking force. When there is a predetermined difference or larger in rotational speed between the plurality of axle shafts 34, the controller 6 only discharges air by controlling the discharge valve 40 to release, for a predetermined period of time, the baking force applied to the wheel W joined to the axle shaft 34 rotating at a lower speed. Alternatively, when there is a predetermined difference or larger in rotational speed between the plurality of axle shafts 34, the controller 6 releases, for a predetermined period of time, the braking force applied to the wheel W joined to the axle shaft 34 rotating at a lower speed irrespective of the variation in rotational speed of the wheel W. In other words, the controller 6 releases the braking force applied to the wheel W joined to the axel shaft 34 rotating at a lower speed and maintains the state in which the braking force is released for a predetermined period of time even if the rotational speed of the axel shaft 34 changes during the predetermined period of time.

In this way, the railcar braking device 1 performs extremely simple flat prevention control of discharging the compressed air supplied to the brake mechanism 16 in one stroke to reduce the braking force to 0 and maintaining this state for a predetermined period of time. According to such control, the amount of air consumption is reduced as compared with the related-art flat prevention control applied to electric trains. In light of the above-described mechanism of occurrence of flats in the freight car 2, occurrence of flats can be effectively inhibited with the simple flat prevention control as described above. Thus, according to this embodiment, flat prevention control suited for application to the freight car 2 can be realized.

Further, the discharge valve 40 is comprised of a single electromagnetic valve. This makes it possible to further simplify the structure of the railcar braking device 1. Further, after an elapse of the predetermined period of time, the controller 6 generates a braking force on the wheel W for which the braking force has been released. By generating the braking force again only in response to an elapse of a predetermined period of time and without determining the situation of restoration of the rotational speed of the axel shaft 34, flat prevention control and device structure can be simplified.

The air brake 4 includes the brake mechanism 16, the supply air tank 14, the variable load valve 15 that controls the supply of air from the supply air tank 14 to the brake mechanism 16, and the pipe 26 that delivers, to the variable load valve 15, the command pressure directing the supply of air from the supply air tank 14 to the brake mechanism 16, wherein the discharge valve 40 is provided in the pipe 26 so as to be able to discharge the air in the pipe 26. Accordingly, the command pressure is reduced by controlling the discharge valve 40, which causes the variable load valve 15 to stop supplying the compressed air from the supply air tank 14 to the brake mechanism 16. As a result, the braking pressure of the brake mechanism 16 is reduced, and the braking force is released. By employing such a structure, significant modification to the brake system provided in the existent freight car can be avoided, and the flat prevention mechanism can be installed in the existent freight car easily.

Further, the railcar braking device 1 is provided with the battery 44 provided external to the freight car 2 to store electric power supplied to the discharge valve 40. In this way, a power source can be secured in the freight car 2, with the installation cost for the power source being reduced. Further, the discharge valve 40 is a normally-open valve. This can inhibit the power consumption in the discharge valve 40 and facilitates reduction in the size of the battery 44.

An embodiment of the present invention has been described above in details. Embodiments described above merely represent certain specific examples of practicing the present invention. The details of the embodiments shall not be construed as limiting the technical scope of the present invention. A number of design modifications such as modification, addition, deletion, etc. of constituting elements may be made to the extent that they do not depart from the idea of the invention defined by the claims. In the embodiments described above, details for which such design modification is possible are highlighted by using an expression like "of this embodiment", "in this embodiment", etc. Design modification may also be made to details for which such an expression is not used. Any combination of the above constituting elements will also be useful as an embodiment of the present invention. Hatching in the cross section in the drawings does not limit the material of the hatched element.

The discharge valve 40 may be provided with a pressure retention valve at the EX port. This makes it possible to allow a brake pressure of a magnitude capable of maintaining the brake pad in a tightened state when the discharge valve 40 is opened and the command pressure in the pipe 26 is discharged. Further, the external battery 44 may be replaced by a standalone battery when it is possible to feed power from the train engine to the freight car 2. This makes it possible to omit periodical battery replacement.

The controller 6 of the embodiment determines whether the wheel W skids based on the result of sensing by the speed sensor 42 and performs flat prevention control accordingly. The embodiment is non-limiting as to the basis for determination. For example, an acceleration sensor for sensing transversal acceleration may be provided in the axle shaft 34 in place of the speed sensor 42, and the controller 6 may perform flat prevention control when the axle shaft 34 is sensed to enter the canted track based on the result of sensing by the acceleration sensor.

The embodiment may be defined by the following items.

[Item 1] A railcar braking device (1) including: a brake that applies a braking force to a wheel (W) joined to an axle shaft (34); and a controller (6) that, when there is a predetermined difference or larger in rotational speed between a plurality of axle shafts (34), controls the brake to release the braking force applied to the wheel (W) joined to the axle shaft (34) rotating at a relatively low speed and to maintain a state in which the braking force is released for a predetermined period of time even if the rotational speed of the axle (34) varies.

The brake according to this embodiment may be a brake that generates a braking force by a means other than air pressure so long as the controller 6 can realize the control described above.

## Claims

1. A railcar braking device (1), comprising:
an air brake (4) that applies a braking force to a wheel (W) joined to an axle shaft (34) with a pressure of air and includes a discharge valve (40) for reducing the pressure of air;
and
a controller (6) that, when there is a predetermined difference or larger in rotational speed between a plurality of axle shafts (34), controls the air brake (4) to only discharge air from the air brake (4) by controlling the discharge valve (40) and to release, for a predetermined period of time, the braking force applied to the wheel (W) joined to the axle shaft (34) rotating at a relatively low speed,
**characterized in that**
the controller (6) controls the air brake (4) to maintain a state in which the braking force is released for the predetermined period of time irrespective of variation in the rotational speed of the axle shaft (34) rotating at the relatively low speed, and
the controller (6) generates, after an elapse of a predetermined period of time, the braking force for the wheel (W) for which the braking force has been released.

2. The railcar braking device (1) according to claim 1, wherein
the air brake (4) includes:
a brake mechanism (16) that applies the braking force to the wheel (W) by supplying air;
a supply air tank (14) that accumulates air supplied to the brake mechanism (16);
a variable load valve (15) that is positioned in accordance with a load on a car (2) to control supply of air from the supply air tank (14) to the brake mechanism (16); and
a pipe (26) that is connected to the variable load valve (15) and delivers, to the variable load valve (15), a command pressure directing supply of air from the supply air tank (14) to the brake mechanism (16), wherein
the discharge valve (40) is provided in the pipe (26) so as to be capable of discharging air in the pipe (26).

3. The railcar braking device (1) according to claim 1 or 2, further comprising:
an external battery (44) that stores electric power supplied to the discharge valve (40).

4. The railcar braking device (1) according to claim 3, wherein
the discharge valve (40) is a normally open valve.

## Patentansprüche

1. Eisenbahnwagen-Bremsvorrichtung (1), die umfasst:
eine Druckluftbremse (4), die mit einem Luftdruck eine Bremskraft auf ein mit einer Achswelle (34) verbundenes Rad (W) ausübt und ein Ablassventil (40) zum Reduzieren des Luftdrucks aufweist; sowie
eine Steuerungseinrichtung (6), die, wenn eine vorgegebene oder größere Drehgeschwindigkeits-Differenz zwischen einer Vielzahl von Achswellen (34) vorliegt, die Druckluftbremse (4) so steuert, dass sie nur Luft aus der Druckluftbremse (4), indem sie das Ablassventil (40) steuert, und über eine vorgegebene Zeitdauer die Bremskraft aufhebt, die auf das Rad (W) ausgeübt wird, das mit der Achswelle (34) verbunden ist, die sich mit einer relativ niedrigen Geschwindigkeit dreht,
**dadurch gekennzeichnet, dass**
die Steuerungseinrichtung (6) die Druckluftbremse (4) so steuert, dass ein Zustand, in dem die Bremskraft über die vorgegebene Zeitdauer aufgehoben wird, unabhängig von Änderung der Drehgeschwindigkeit der Achswelle (34) aufrechterhalten wird, die sich mit der relativ niedrigen Geschwindigkeit dreht, und
die Steuerungseinrichtung (6) nach Ablauf einer vorgegebenen Zeitdauer die Bremskraft für das Rad (W) erzeugt, für das die Bremskraft aufgehoben worden ist.

2. Eisenbahnwagen-Bremsvorrichtung (1) nach Anspruch 1, wobei
die Druckluftbremse (4) einschließt:
einen Bremsmechanismus (16), der die Bremskraft durch Zuführen von Luft auf das Rad (W) ausübt;
einen Luft-Versorgungsbehälter (14), der Luft speichert, die dem Bremsmechanismus (16) zugeführt wird;
ein regelbares Lastventil (15), das entsprechend einer Last an einem Wagen (2) eingestellt wird, um Zufuhr von Luft von dem Luft-Versorgungsbehälter (14) zu dem Bremsmechanismus (16) zu steuern; sowie
eine Leitung (26), die mit dem regelbaren Lastventil (15) verbunden ist und an das regelbare Lastventil (15) einen Steuerdruck abgibt, der Zufuhr von Luft von dem Luft-Versorgungsbehälter (14) zu dem Bremsmechanismus (16) kontrolliert, wobei das Ablassventil (40) in der Leitung (26) vorhanden und in der Lage ist, Luft in der Leitung (26) abzulassen.

3. Eisenbahnwagen-Bremsvorrichtung (1) nach Anspruch 1 oder 2, die des Weiteren umfasst:
eine externe Batterie (44), die Strom speichert, der dem Ablassventil (40) zugeführt wird.

4. Eisenbahnwagen-Bremsvorrichtung (1) nach Anspruch 3, wobei
das Ablassventil (40) ein normalerweise offenes Ventil ist.

## Revendications

1. Dispositif de freinage de véhicule sur rail (1), comprenant :
un frein pneumatique (4) qui applique une force de freinage à une roue (W) reliée à un arbre d'essieu (34) avec une pression d'air et comporte une soupape de décharge (40) pour réduire la pression d'air ; et
une unité de commande (6) qui, lorsqu'il existe une différence prédéterminée ou plus grande de vitesse de rotation entre une pluralité d'arbres d'essieu (34), commande le frein pneumatique (4) pour ne décharger que l'air du frein pneumatique (4) en commandant la soupape de décharge (40) et pour libérer, pendant une période de temps prédéterminée, la force de freinage appliquée à la roue (W) reliée à l'arbre d'essieu (34) tournant à une vitesse relativement faible,
**caractérisé en ce que**
l'unité de commande (6) commande le frein pneumatique (4) pour maintenir un état dans lequel la force de freinage est libérée pendant la période de temps prédéterminée indépendamment de la variation de la vitesse de rotation de l'arbre d'essieu (34) tournant à la vitesse relativement faible, et
l'unité de commande (6) génère, après un écoulement d'une période de temps prédéterminée, la force de freinage pour la roue (W) pour laquelle la force de freinage a été libérée.

2. Dispositif de freinage de véhicule sur rail (1) selon la revendication 1, dans lequel
le frein pneumatique (4) comporte :
un mécanisme de frein (16) qui applique la force de freinage à la roue (W) par alimentation en air ;
un réservoir d'air d'alimentation (14) qui accumule l'air alimentant le mécanisme de frein (16) ;
une soupape à charge variable (15) qui est positionnée conformément à une charge sur un véhicule (2) pour commander l'alimentation en air du réservoir d'air d'alimentation (14) au mécanisme de frein (16) ; et
un tuyau (26) qui est raccordé à la soupape à charge variable (15) et délivre, à la soupape à charge variable (15), une pression d'instruction dirigeant l'alimentation en air depuis le réservoir d'air d'alimentation (14) vers le mécanisme de frein (16), où
la soupape de décharge (40) est prévue dans le tuyau (26) de manière à pouvoir décharger de l'air dans le tuyau (26).

3. Dispositif de freinage de véhicule sur rail (1) selon la revendication 1 ou 2, comprenant en outre :
une batterie externe (44) qui stocke l'énergie électrique fournie à la soupape de décharge (40).

4. Dispositif de freinage de véhicule sur rail (1) selon la revendication 3, dans lequel
la soupape de décharge (40) est une soupape normalement ouverte.
